# FASCICULE DE BREVET EUROPEEN

(11) **EP 4 070 163 B1**
(45) Date de publication et mention de la délivrance du brevet: **08.10.2025**
(21) Numéro de dépôt: 20807438.5
(22) Date de dépôt: 20.11.2020
(51) Int. Cl.: G04G 21/02, G04G 9/00

(54) **MONTRE COMPORTANT UN SYSTÈME DE CONTRÔLE D'ACCÈS BIOMETRIQUE À UNE DONNÉE CONFIDENTIELLE**
ARMBANDUHR, DIE EIN BIOMETRISCHES ZUGRIFFSKONTROLLSYSTEM ZU VERTRAULICHEN DATEN UMFASST
WATCH COMPRISING A SYSTEM FOR CONTROLLING BIOMETRIC ACCESS TO CONFIDENTIAL DATA

(30) Priorité: 06.12.2019 EP 19214185
(43) Date de publication de la demande: 12.10.2022
(73) Titulaire: Tissot S.A., 2400 Le Locle (CH)
(72) Inventeur: FRANZI, Edoardo, 1400 Cheseaux-Noréaz (CH)
(74) Mandataire: ICB SA
(86) Numéro de dépôt international: PCT/EP2020/082819
(87) Numéro de publication internationale: WO 2021/110427

(56) Documents cités:
- WO-A1-2018/231713
- FR-A1- 2 997 528
- US-A1- 2016 004 224
- US-A1- 2017 235 933
- US-A1- 2019 095 602

## Description

### Domaine technique

La présente invention concerne une montre comportant un système de contrôle d'accès biométrique à une donnée confidentielle archivé dans un élément de mémoire de cette montre. Plus précisément, l'invention porte sur un procédé de contrôle d'accès à au moins une donnée confidentielle archivée dans un élément de mémoire d'une montre et un système mettant en œuvre un tel procédé.

US 2019/095602 A1 décrit l'accès à une fonction d'une montre par une authentification biométrique de l'identité d'un utilisateur.

L'invention concerne également un programme d'ordinateur.

### Art antérieur

Une montre comprend un ensemble de fonctions qui peut être utilisé par le porteur. De telles fonctions peuvent permettre de consulter des données personnelles de ce porteur ou encore d'accéder à des prestations de service telles que des prestations bancaires, des prestations commerciales (boutiques en ligne, entreprises de commerce électronique) ou encore des prestations de messagerie électronique ou de messagerie instantanée. Dans un tel contexte, un inconvénient réside ici dans le fait qu'une fois que le porteur de la montre est authentifié il est possible à n'importe quel individu d'avoir accès aux fonctions de la montre notamment dans le cas où cette dernière a été volée et de pouvoir ainsi accéder aux données personnelles et confidentielles du porteur.

On comprend qu'il existe un besoin de trouver une solution, notamment qui ne présente pas les inconvénients de l'art antérieur.

### Résumé de l'invention

Un but de la présente invention est par conséquent de proposer une solution sécurisée, fiable, sure et robuste permettant de contrôler l'accès aux données confidentielles archivées dans un élément de mémoire d'une montre.

Dans ce dessein, le procédé de contrôle d'accès à au moins une donnée confidentielle archivée dans un élément de mémoire d'une montre est décrite par la revendication indépendante 1.

D'autres formes d'exécution préférées sont décrites dans les revendications dépendantes.

L'invention concerne aussi un système de contrôle d'accès à au moins une donnée confidentielle archivée dans un élément de mémoire d'une montre, mettant en œuvre le procédé selon l'une quelconque des revendications précédentes, le système comprenant les éléments suivants reliés entre eux : une unité de traitement, un capteur biométrique multispectral de peau, une interface de saisie, une interface de diffusion d'une information visuelle et l'élément de mémoire comprenant deux catégories de données, des données générales et lesdites données confidentielles.

L'invention concerne également une montre, notamment une montre mécanique connectée, comportant un tel système.

Programme d'ordinateur comprenant des instructions de code de programme pour l'exécution des étapes du procédé lorsque ledit programme est exécuté par une unité de traitement.

### Brève description des figures

D'autres particularités et avantages ressortiront clairement de la description qui en est faite ci-après, à titre indicatif et nullement limitatif, en référence aux figures annexées, dans lesquelles :
- la figure 1 est une représentation schématique d'une montre comprenant un système de contrôle d'accès à au moins une donnée confidentielle archivée dans un élément de mémoire de cette montre, selon un mode de réalisation de l'invention, et
- la figure 2 est un logigramme relatif à un procédé de contrôle d'accès à au moins une donnée confidentielle archivée dans l'élément de mémoire de la montre, selon le mode de réalisation de l'invention.

### Description détaillée de l'invention

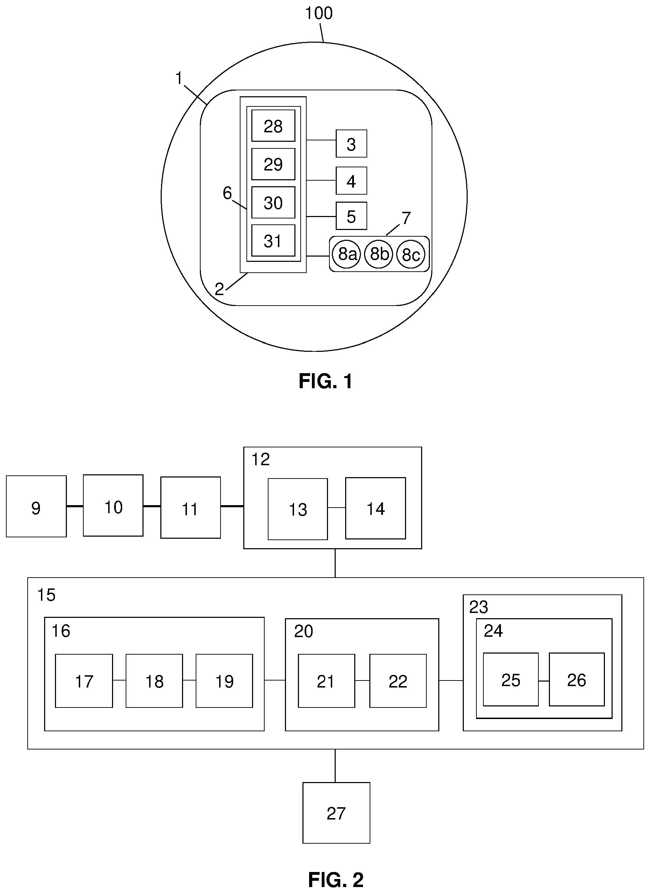

Sur la figure 1 est représentée une montre comprenant un système 1 de contrôle d'accès à au moins une donnée confidentielle archivée dans un élément de mémoire de cette montre. Une telle montre 100 est de préférence une montre 100 mécanique connectée comprenant un corps tel qu'une boîte de montre, et un élément d'attache tel qu'un bracelet permettant de fixer ce corps par exemple au poignet du porteur. Cette montre 100 comprend plus précisément de manière non limitative et/ou non exhaustive :
- une unité de traitement 2 comportant des ressources matérielles et logicielles en particulier au moins un processeur coopérant avec un élément de mémoire 3, ledit élément de mémoire 3 comprenant notamment deux catégories de données, des données générales 31 et des données confidentielles 28 ;
- une interface de diffusion d'une information visuelle 4 telle qu'un cadran d'affichage hybride pourvu d'une première composante d'affichage analogique et d'une deuxième composante d'affichage numérique et/ou alphanumérique ;
- une interface de saisie 5 tel qu'un clavier ou encore une interface tactile comprise par exemple dans l'interface de diffusion d'une information visuelle 4, et
- un capteur biométrique multispectral de peau 7 comprenant au moins un capteur photographique 8a, au moins une source d'éclairage multispectral 8b et au moins un capteur d'image thermique 8c, la source d'éclairage 8b pouvant émettre un rayonnement lumineux dans des longueurs d'ondes comprises entre 300 et 1100 nm, de plus cette source d'éclairage 8b peut être du type laser.

Dans le présent mode de réalisation de l'invention, les données confidentielles 28 sont des données personnelles/secrètes/privées du porteur de la montre 100 et dont l'accès par une fonction donnée de cette montre 100 requiert une identification du porteur. Les données générales sont quant à eux des données dites « publiques » pouvant être relatives au porteur et au regard desquelles une fonction donnée peut accéder librement. A titre d'exemple, les données confidentielles 28 peuvent comprendre des fichiers numériques relatifs à des images, des vidéos, des documents (par exemple aux format texte, tableur, XML, etc...) comportant des informations confidentielles comme des informations personnelles du porteur (bancaires, nom, adresse, date de naissance, poids, âge, sexe, rythme cardiaque, cycle de sommeil, etc...). Ces données confidentielles 28 peuvent aussi comprendre des clés de chiffrement/déchiffrement, des certificats, des codes d'authentification, des mots de passe et des codes personnels.

Dans cette montre 100, l'unité de traitement 2 est reliée entre autres à l'interface de diffusion d'une information visuelle 4, à l'interface de saisie 5 ainsi qu'au capteur biométrique multispectral 7. On notera en complément que le capteur biométrique multispectral 7 est agencé dans le corps du dispositif électronique 100 et/ou dans l'élément d'attache.

Cette montre 100 est apte à assurer le contrôle de l'identité du porteur authentifié de manière discrète c'est-à-dire sans intervention/interaction directe du porteur avec cette montre 100 et ce, tant que la montre est portée. L'identification du porteur est alors effectuée de manière transparente et discrète et ce, à partir d'au moins un élément d'information biométrique compris dans la peau de ce porteur tel que le réseau vasculaire de la peau ou encore la texture de cette peau. Cette peau du porteur qui recouvre son corps a une particularité, moins évidente à envisager par l'homme de l'art car non visualisable naturellement par l'œil humain, liée aux caractéristiques d'absorption et de réflexion à différentes longueurs d'onde (spectre) des composantes de la peau, situées à différentes profondeurs. Dans un modèle simplifié, la peau est constituée d'une couche nommée « épiderme », semi transparente et située en surface puis, sous l'épiderme, d'une couche nommée le « derme » et comprenant, entre autres, les vaisseaux sanguins (ou réseau vasculaire) dans lesquels l'hémoglobine est fortement réfléchissante aux longueurs d'onde élevées proches du rouge en étant comprises par exemple entre 760 et 930 nm ce qui permet ici de révéler ou mettre en évidence le réseau vasculaire de la peau du porteur. En d'autres termes, le spectre d'absorption lumineux des composantes de l'épiderme et du derme constituant la peau n'étant pas uniforme selon les longueurs d'ondes électromagnétiques, l'apparence et la couleur de la peau résultent d'une combinaison complexe de ces phénomènes. Ainsi, lorsqu'il s'agit de mettre en évidence ou de révéler un élément d'information biométrique comme la texture de la peau de ce porteur, texture essentiellement formée de crevasses ou cavités, l'éclairage de la peau peut être alors assuré par une source d"éclairage restreinte aux longueurs d'onde aux alentours du rouge qui tend à faire disparaître le phénomène d'ombres du fond des crevasses. En effet, il se produit un effet de rétro projection par réflexion sur le derme et à travers l'épiderme de ces longueurs d'onde proches du rouge, alors que l'éclairage de la peau par une source de spectre colorimétrique éloigné du rouge, typiquement la bande de longueurs d'onde située entre le violet (400 nm) et jusqu'au jaune-orangé (600 nm), permet au contraire de mettre fortement en contraste ces crevasses de la peau par l'apparition d'ombres au fond de ces crevasses. On notera que l'identification d'un élément d'information biométrique compris dans la peau peut être améliorée par l'utilisation du capteur d'image thermique 8c de préférence sans éclairage. A titre d'exemple, pour la mise en évidence de la texture de la peau notamment lorsque la portion de la peau concernée de ce porteur est pourvue de poils, l'utilisation du capteur d'image thermique 8c permet de révéler les crevasses de cette texture de la peau qui sont généralement plus chaudes que la peau environnante et les poils plus froids que cette peau environnante. Ainsi dans cette configuration les poils peuvent être distingués thermiquement des crevasses de la texture de la peau du fait de cette différence entre leur température respective.

On notera que la capture d'images thermiques peut être réalisée sous un éclairage dans une longueur d'onde donnée selon l'élément d'information biométrique qu'il convient de mettre en évidence ou de révéler.

On comprend donc, selon le principe de l'invention, que l'identification du porteur est réalisée à partir d'au moins un élément d'information biométrique compris dans des images d'une portion de peau de ce porteur qui peut être éclairée le cas échéant selon différentes longueur d'onde afin de capturer des images comprenant l'élément d'information biométrique recherché. Ainsi, cet élément d'information biométrique, compris dans ces images, peut être mis en évidence par l'éclairage effectué dans différentes longueurs d'onde ou sans éclairage par exemple lorsqu'il s'agit de réaliser une capture d'images thermiques.

Dans cette montre, l'élément de mémoire 3 de l'unité de traitement 2 de la montre 100 comprend des données confidentielles 28 et des données générales 31 ainsi que des paramètres de classification de ces données dans l'une ou l'autre de ces deux catégories confidentielle ou générale. Ces éléments de mémoire 3 comportent également des algorithmes de traitement numérique 29 d'images permettant de caractériser au moins un élément d'information biométrique relatif à la peau du porteur et qui est compris dans les images relatives à la portion de peau du porteur. Cet élément de mémoire 3 comportent aussi des algorithmes de génération 30 de l'élément d'identification numérique de référence mais aussi d'un élément d'identification numérique.

Ainsi que l'illustre la figure 2, le système 1 est apte à mettre en œuvre un procédé de contrôle d'accès à au moins une donnée confidentielle archivée dans un élément de mémoire d'une montre, ledit élément de mémoire comprenant deux catégories de données, des données générales 31 et lesdites données confidentielles 28.

Ce procédé comprend une étape d'authentification 9 du porteur de la montre 100 autorisant un accès à l'utilisation de fonctions de cette montre 100. Cette étape d'authentification 9 permet donc d'identifier de manière certaine le porteur de la montre afin qu'il puisse avoir accès à l'utilisation de toutes les fonctions de cette montre 100. Autrement dit, elle permet au porteur d'apporter la preuve de son identité en prévoyant la saisie d'un code d'authentification ou d'un code secret par le biais d'une interaction entre le porteur et l'interface de saisie 34.

En complément, on comprend que les fonctions peuvent être mises en œuvre par des algorithmes de traitement exécutés par l'unité de traitement 2 de la montre 100 dès lors que ces fonctions sont activées/sélectionnées suite à une interaction entre le porteur et l'interface de saisie 5 de cette montre 100. Ces algorithmes ainsi exécutés requiert une utilisation des données générales 31 et/ou des données confidentielles 28. Dans des exemples ici énoncés de manière non limitative et non exhaustive, ces fonctions de la montre peuvent concerner une fonction d'édition d'image ou de vidéo, une fonction de traitement de texte, une fonction de connexion à service de prestation bancaire, fonction de connexion à un service de prestation commerciale (boutiques en ligne, entreprises de commerce électronique), fonction de connexion à un service de messagerie électronique ou de messagerie instantanée.

A la suite de cette étape d'authentification 9, le procédé comprend une étape de sélection 10 d'une desdites fonctions de la montre requérant l'utilisation d'au moins une desdites données confidentielles 28 ou générales 31 archivées dans l'élément de mémoire. Lors de cette étape 10, cette fonction est sélectionnée parmi toutes les fonctions de la montre qui sont affichées sur l'interface de diffusion visuelle 4 et ce, suite à une interaction entre le porteur et l'interface de saisie 5 de cette montre 100. Ainsi que nous l'avons évoqué précédemment, une telle interaction participe alors à l'exécution par l'unité de traitement 2 d'un algorithme de traitement visant en la réalisation de cette fonction à partir notamment d'au moins une donnée archivée dans l'élément de mémoire 3 qui ici est nécessaire à la mise en œuvre de cette algorithme.

Le procédé comprend ensuite une étape de détermination 12 de la catégorie à laquelle appartient ladite au moins une donnée requise par la fonction. Cette étape 12 comprend une sous-étape d'estimation 13 d'un critère d'accès à ladite donnée qui définit l'appartenance de ladite donnée à la catégorie des données confidentielles 28 ou à la catégorie des données générales 31. Cette sous-étape 13 comprend une phase de mise en œuvre d'opérations de calcul par l'unité de traitement 2 pour l'obtention de ce critère d'accès et ce, à partir de ladite donnée, de la nature ou type de la fonction et d'un paramètre de classification de cette donnée. Un tel paramètre est archivé dans l'élément de mémoire de l'unité de traitement de la montre en étant associé à la donnée correspondante. Ce paramètre définit l'appartenance de ladite donnée à l'une ou l'autre des catégories des données confidentielles 28 ou générales 31 et ce, en fonction de la nature ou du type des différentes fonctions de la montre, susceptibles de requérir une telle donnée dans le cadre de leur mise en œuvre.

Ainsi, ce paramètre peut permettre de définir qu'une donnée telle qu'une image est une donnée confidentielle pour une fonction donnée et une donnée générale pour une autre fonction de la montre. On comprend donc que dans ce contexte, l'appartenance de la donnée à l'une ou l'autre de ces deux catégories est relative à la fonction qui en requiert l'utilisation.

L'étape de détermination 12 comporte ensuite une sous-étape de comparaison 14 entre ce critère d'accès estimé et un critère de référence. Dans ce contexte, ladite au moins une donnée requise par la fonction appartient à la catégorie des données confidentielles 28 si le critère d'accès est supérieur ou égal au critère de référence. A l'inverse, si le critère d'accès est inférieur au critère de référence alors ladite au moins une donnée est comprise dans la catégorie des données générales.

Par la suite, le procédé comprend une étape de vérification 15 de l'identité du porteur de la montre 100 à partir d'au moins un élément d'information biométrique compris dans une portion de peau de ce porteur dès lors que ladite au moins une donnée appartient à la catégorie des données confidentielles 28. Un telle étape 15 est effectuée systématiquement à la suite de la détermination de l'appartenance d'au moins une donnée dont l'utilisation est requise pour la réalisation de la fonction sélectionnée, à la catégorie des données confidentielles 28 et ce, afin notamment de permettre à l'unité de traitement 2 de contrôler que le porteur de la montre 100 est toujours en possession de cette dernière. Cette étape 15 comprend une sous-étape d'acquisition 16 par le capteur 7 d'une pluralité d'images d'une portion de peau du porteur, ladite portion de peau étant agencée de manière adjacente audit capteur 7, lesdites images comprenant ledit au moins un élément d'information biométrique compris dans cette portion de peau. Cette sous-étape 16 comprend une phase d'éclairage 17 de la portion de peau selon différentes longueurs d'onde. Plus précisément, lors de cette phase 17, l'unité de traitement 2 pilote le capteur biométrique multispectral 7 et en particulier la source d'éclairage 8b de manière à ce que cette dernière émette un rayonnement lumineux en direction de la portion de peau selon une longueur d'onde précise adaptée à la mise en évidence ou à révéler ledit au moins un élément d'information biométrique spécifique de la peau qui est ici recherché. Une fois l'éclairage configuré, la sous-étape d'acquisition 16 comprend une phase de capture 18 d'images de cette portion de peau éclairée à au moins une longueur d'onde susceptible de mettre en évidence ou de révéler ledit au moins un élément d'information biométrique. Lors de cette phase 18, l'unité de traitement 2 pilote le capteur biométrique multispectral 7 de peau et en particulier le capteur photographique 8a de manière synchrone avec l'activation/désactivation de la source d'éclairage 8b à une longueur d'onde donnée et ce, afin de réaliser une capture d'au moins une image relative à la portion de peau éclairée pour au moins une longueur d'onde.

Cette sous-étape d'acquisition 16 peut comprendre aussi une phase de capture 19 d'au moins une image thermique de la portion de peau. Une telle phase 19 est réalisée de préférence sans éclairage mais dans d'autres alternatives un éclairage de la portion peut être effectué dans au moins une longueur d'onde donnée, cela dépendant évidemment de l'élément d'information biométrique qu'il convient de mettre en évidence ou de révéler. Cette phase 19 peut être réalisée avant ou après les phases d'éclairage 16 et de capture 117 d'images.

L'étape de vérification 15 comprend ensuite une sous-étape de génération 20 de l'élément d'identification numérique à partir dudit au moins un élément d'information biométrique compris dans les images acquises de la portion de peau. Une telle sous-étape 20 comprend une phase de caractérisation 21 dudit élément d'information biométrique compris dans les images relatives à ladite portion de peau. Lors de cette phase 21, l'unité de traitement 2 met en œuvre des algorithmes de traitement 29 des images acquises visant à identifier/détecter dans chacune d'entre elles ledit au moins un élément d'information biométrique qu'elles comprennent. Ainsi que nous l'avons déjà évoqué précédemment, il peut s'agir d'éléments d'information relatifs par exemple à la texture de la peau ou au réseau vasculaire compris dans cette portion de peau du porteur. La mise en œuvre de ces algorithmes 29, 30 par l'unité de traitement 2 peut, à titre d'exemple, prévoir un processus de découpe en segments de ces images. On comprend ici que chaque image acquise donne une vue globale de la portion de la peau du porteur, et comporte alors des zones de pertinence variables pour l'identification dudit au moins un élément d'information biométrique. Un tel processus de découpe participe à extraire les segments à traiter et à éliminer les parties à ne pas traiter dans ces images. Ces algorithmes 29 peuvent ensuite prévoir un indexage de ces segments d'image comprenant des caractéristiques relatives audit au moins un élément d'information biométrique particulier à identifier, par zones de localisation dans la portion de peau et ce, afin de pouvoir affecter à chaque zone le traitement adéquat vis-à-vis de la typologie morphologique de la caractéristique de cette zone géographique de la portion. Dans ce contexte, ces algorithmes 29 traitent chaque segment de ces images en mettant en évidence les informations portées par les pixels de chacune de ces images par la réalisation d'opérations d'analyse d'image de type traitements, transformations et détections. Par la suite, ces algorithmes 29 effectuent des opérations de filtrage et d'extraction de caractéristiques ou de vectorisation, afin de convertir les données images relatives audit au moins un élément d'information biométrique identifié et extrait, en des données paramétriques, typiquement des valeurs numériques relatives exprimées par exemple en indice ou en pourcentage.

On comprend ici que l'acquisition de plusieurs images représentant la même portion de peau sous différents éclairages ou sans éclairage, participe à améliorer la précision et l'efficacité de cette phase de caractérisation 21.

Par la suite, la sous-étape de génération 20 comprend une phase de conception 22 de l'élément d'identification numérique à partir de la caractérisation dudit au moins un élément d'information biométrique. Lors de cette phase 22, l'unité de traitement 2 met en œuvre des algorithmes de génération 30 d'un tel élément d'identification numérique spécifiquement prévus pour le traitement des données paramétriques obtenues lors de la phase de caractérisation 21, lesquelles données paramétriques étant relatives audit au moins un élément d'information biométrique.

Ensuite, l'étape de vérification 15 comprend une sous-étape de validation 23 de l'élément d'identification numérique généré en prévision d'un contrôle de l'identité du porteur. Cette sous-étape de validation 23 comprend une phase de comparaison 24, mise en œuvre par l'unité de traitement 2, entre l'élément d'identification numérique généré et l'élément d'identification numérique de référence. Dans ce procédé, l'élément d'identification numérique de référence peut être créé, dès lors que le porteur a été dûment authentifié et que son identité est certaine et ce, lors d'une étape de définition 11 de cet élément d'identification numérique de référence prévoyant des sous-étapes similaires aux sous-étapes de d'acquisition 16 et de génération 20 mises en œuvre durant l'étape de vérification 15. Dans ce procédé, une fois que le porteur de la montre 100 est authentifié, l'unité de traitement 2 met en œuvre cette étape de définition 11 et effectue ensuite un archivage de l'élément d'identification numérique de référence obtenu dans l'élément de mémoire 3 de l'unité de traitement 2. Cet élément d'identification numérique de référence peut donc être déterminé automatiquement par l'unité de traitement 2 ou configuré par le porteur durant un processus de réglage visant à guider le porteur dans la définition de cet élément d'identification numérique de référence.

Cette phase de comparaison 24 comprend une sous-phase de rejet de l'identification du porteur 25 si l'élément d'identification numérique généré est sensiblement différent ou différent de l'élément d'identification numérique de référence. Dans ce cas de figure, l'exécution par l'unité de traitement 2 de l'algorithme de traitement visant en la réalisation de cette fonction est arrêté par l'unité de traitement 2. De plus, l'accès à la montre 100 est aussi supprimé et en particulier l'accès aux fonctions de cette montre. Dans ce contexte, le porteur de la montre est invité à s'authentifier de nouveau, lors d'une nouvelle exécution de l'étape d'authentification 9, afin d'apporter la preuve de son identité par la saisie d'un code d'authentification ou d'un code secret et ce, par le biais d'une interaction entre le porteur et l'interface de saisie 34. En effet, le porteur et propriétaire de la montre 100 peut ne plus être en sa possession.

La phase de comparaison 24 comprend aussi une sous-phase d'identification 26 du porteur avec succès si l'élément d'identification numérique généré est sensiblement similaire ou similaire à l'élément d'identification numérique de référence. Dans ce cas, le procédé prévoit alors la mise en œuvre d'une étape d'autorisation 27 d'utilisation de ladite au moins une donnée appartenant à la catégorie des données confidentielles 28 dès lors que l'identité du porteur de la montre est vérifiée. Lors de cette étape 27, l'unité de traitement 2 poursuit l'exécution par l'algorithme de traitement visant en la réalisation de cette fonction à partir de la donnée archivée dans l'élément de mémoire 6.

L'invention porte aussi sur un programme d'ordinateur comprenant des instructions de code de programme pour l'exécution des étapes 10 à 27 de ce procédé lorsque ledit programme est exécuté par l'unité de traitement 2 de la montre 100.

## Revendications

1. Procédé de contrôle d'accès à au moins une donnée confidentielle (28) archivée dans un élément de mémoire d'une montre, ledit élément de mémoire comprenant deux catégories de données, des données générales (31) et lesdites données confidentielles (28), le procédé comportant les étapes suivantes :
- authentification (9) du porteur de la montre (100) en vue d'autoriser un accès aux fonctions de cette montre (100), ladite étape permettant audit porteur d'apporter la preuve de son identité en prévoyant une saisie d'un code d'authentification ou d'un code secret par le biais d'une interaction entre le porteur et une interface de saisie (34) de la montre (100) ;
- après cette authentification (9), sélection (10) d'une desdites fonctions de la montre requérant l'utilisation d'au moins une desdites données confidentielles (28) ou générales (31) archivées dans l'élément de mémoire ;
- détermination (12) de la catégorie à laquelle appartient ladite au moins une donnée requise par la fonction, ladite étape (12) comprend une sous-étape d'estimation (13) d'un critère d'accès à ladite donnée qui définit l'appartenance de ladite donnée à la catégorie des données confidentielles (28) ou à la catégorie des données générales (31), ladite sous-étape (13) comprenant une phase de mise en œuvre d'opérations de calcul par une unité de traitement (2) pour l'obtention de ce critère d'accès et ce, à partir de ladite donnée, de la nature ou type de la fonction et d'un paramètre de classification de cette donnée, ledit paramètre définissant l'appartenance de ladite donnée à l'une ou l'autre des catégories des données confidentielles (28) ou générales (31) et cette définition par ledit paramètre, en fonction de la nature ou du type des différentes fonctions de la montre, requérant des données confidentielles (28) ou générales (31) dans le cadre de leur mise en œuvre ;
- vérification (15) de l'identité du porteur de la montre (100) à partir d'au moins un élément d'information biométrique compris dans une portion de peau de ce porteur dès lors que ladite au moins une donnée appartient à la catégorie des données confidentielles (28), ladite étape (15) comprenant :
▪une phase d'éclairage de la portion de peau selon différentes longueurs d'onde ;
▪une phase de capture d'images de cette portion de peau éclairée à au moins une longueur d'onde, et
▪après cette phase de capteur d'image, une phase de capture d'au moins une image thermique de la portion de peau ;
- autorisation (27) d'utilisation de ladite au moins une donnée confidentielle par la fonction dès lors que l'identité du porteur de la montre est vérifiée.

2. Procédé selon la revendication précédente, **caractérisé en ce que** l'étape de de détermination (12) comprend une sous-étape de comparaison (14) entre le critère d'accès estimé et un critère de référence.

3. Procédé selon l'une quelconque des revendications précédentes, **caractérisé en ce que** l'étape de vérification (15) comprend une sous-étape d'acquisition (16) par au moins un capteur biométrique multispectral de peau (7) compris dans la montre (100), d'une pluralité d'images d'une portion de peau du porteur adjacente audit capteur (7), lesdites images comprenant ledit au moins un élément d'information biométrique compris dans cette portion de peau.

4. Procédé selon l'une quelconque des revendications précédentes, **caractérisé en ce que** l'étape de vérification (15) comprend une sous-étape de génération (17) d'un élément d'identification numérique à partir dudit au moins un élément d'information biométrique compris dans les images acquises de la portion de peau.

5. Procédé selon l'une quelconque des revendications précédentes, **caractérisé en ce que** l'étape de vérification (15) comprend une sous-étape de validation (23) d'un élément d'identification numérique généré en prévision de l'identification du porteur.

6. Procédé selon l'une quelconque des revendications précédentes, **caractérisé en ce que** l'élément d'information biométrique est relatif à un réseau vasculaire ou à une texture de cette peau.

7. Système (1) de contrôle d'accès à au moins une donnée confidentielle archivée dans un élément de mémoire d'une montre (100), mettant en œuvre le procédé selon l'une quelconque des revendications précédentes, le système comprenant les éléments suivants reliés entre eux : une unité de traitement (2), un capteur biométrique multispectral de peau (7), une interface de saisie (34), une interface de diffusion d'une information visuelle (4) et l'élément de mémoire (6) comprenant deux catégories de données, des données générales (31) et lesdites données confidentielles (28).

8. Montre (100), notamment une montre (100) mécanique connectée, comportant un système (1) selon la revendication précédente.

9. Programme d'ordinateur comprenant des instructions de code de programme pour l'exécution des étapes (10 à 27) du procédé selon l'une quelconque des revendications 1 à 6 lorsque ledit programme est exécuté par une unité de traitement (2).

## Patentansprüche

1. Verfahren zum Steuern des Zugriffs auf mindestens ein vertrauliches Datenelement (28), das in einem Speicherelement einer Uhr archiviert ist, wobei das Speicherelement zwei Datenkategorien, allgemeine Daten (31) und die vertraulichen Daten (28), umfasst, wobei das Verfahren die folgenden Schritte umfasst:
- Authentifizierung (9) des Trägers der Uhr (100), um Zugriff auf die Funktionen der Uhr (100) zu autorisieren, wobei der Schritt es dem Träger ermöglicht, einen Nachweis seiner Identität einzugeben, indem die Eingabe eines Authentifizierungscodes oder eines Geheimcodes über eine Interaktion zwischen dem Träger und einer Eingabeschnittstelle (34) an der Uhr (100) vorgesehen wird;
- nach der Authentifizierung, Auswahl (10) einer der Uhrfunktionen, welche die Verwendung von mindestens einem von den vertraulichen (28) oder allgemeinen (31) Daten, die in dem Speicherelement archiviert sind, erfordert;
- Bestimmung (12) der Kategorie, zu der das mindestens eine von der Funktion erforderte Datenelement gehört; wobei der Schritt (12) einen Abschätzungsunterschritt (13) umfasst, in dem abgeschätzt wird, ob ein Zugriffskriterium für das Datenelement definiert, ob das Datenelement zu der Kategorie vertraulicher Daten (28) oder zu der Kategorie allgemeiner Daten (31) gehört, wobei der Unterschritt (13) eine Phase umfasst, in der Rechenoperationen durch eine Verarbeitungseinheit implementiert werden (2), um das Zugriffskriterium von dem Datenelement, die Art oder den Typ der Funktion und einen Parameter zum Klassifizieren des Datenelements zu erhalten, wobei der Parameter definiert, ob das Datenelement zu der einen oder der anderen der Kategorien von vertraulichen Daten (28) oder allgemeinen Daten (31) gehört, und wobei die Definition durch den Parameter, gemäß der Art oder des Typs der verschiedenen Funktionen der Uhr, vertrauliche Daten (28) oder allgemeine Daten (31) im Zusammenhang mit ihrer Ausführungsform erfordern;
- Verifizierung (15) der Identität des Trägers der Uhr (100) aus mindestens einem Element biometrischer Informationen, das in einem Teil der Haut des Trägers vorhanden ist, wenn das mindestens eine Datenelement zu der Kategorie vertraulicher Daten (28) gehört, der Schritt (15) umfassend:
• eine Phase, in welcher der Hautabschnitt bei verschiedenen Wellenlängen beleuchtet wird;
• eine Phase, in der Bilder von diesem Hautabschnitt erfasst werden, der bei mindestens einer Wellenlänge beleuchtet wurde, und
• im Anschluss an diese Bilderfassungsphase, eine Phase, in der mindestens ein thermisches Bild des Hautabschnitts erfasst wird;
- Autorisierung (27) zur Verwendung des mindestens einen vertraulichen Datenelements durch die Funktion, sobald die Identität des Trägers der Uhr verifiziert ist.

2. Verfahren nach dem vorhergehenden Anspruch, **dadurch gekennzeichnet, dass** der Bestimmungsschritt (12) einen Vergleichsunterschritt (14) umfasst, in dem das geschätzte Zugriffskriterium mit einem Referenzkriterium verglichen wird.

3. Verfahren nach einem der vorhergehenden Ansprüche, **dadurch gekennzeichnet, dass** der Verifizierungsschritt (15) einen Erfassungsunterschritt umfasst, in dem eine Vielzahl von Bildern eines Abschnitts der Haut des Trägers, der dem Sensor (7) benachbart ist, durch mindestens einen multispektralen biometrischen Hautsensor (7) erfasst (16) wird, der in der Uhr (100) enthalten ist, wobei die Bilder das mindestens eine biometrische Informationselement umfassen, das in diesem Hautabschnitt enthalten ist.

4. Verfahren nach einem der vorhergehenden Ansprüche, **dadurch gekennzeichnet, dass** der Verifizierungsschritt (15) einen Erzeugungsunterschritt (17) umfasst, in dem ein Element einer digitalen Identifikation aus dem mindestens einen biometrischen Informationselement, das in den erfassten Bildern des Hautabschnitts enthalten ist, erzeugt wird.

5. Verfahren nach einem der vorhergehenden Ansprüche, **dadurch gekennzeichnet, dass** der Verifizierungsschritt (15) einen Validierungsunterschritt (23) umfasst, in dem ein im Voraus der Identifizierung des Trägers erzeugtes digitales Identifizierungselement validiert wird.

6. Verfahren nach einem der vorhergehenden Ansprüche, **dadurch gekennzeichnet, dass** sich das biometrische Informationselement auf ein Gefäßnetz oder auf eine Textur der Haut bezieht.

7. System (1) zum Steuern des Zugriffs auf mindestens ein vertrauliches Datenelement, das in einem Speicherelement einer Uhr (100) archiviert ist, unter Implementierung des Verfahrens nach einem der vorhergehenden Ansprüche, wobei das System die folgenden miteinander verknüpften Elemente umfasst: eine Verarbeitungseinheit (2), einen multispektralen biometrischen Hautsensor (7), eine Eingabeschnittstelle (34), eine Schnittstelle zum Übertragen visueller Informationen (4) und das Speicherelement (6), das zwei Datenkategorien, allgemeine Daten (31) und die vertraulichen Daten (28), umfasst.

8. Uhr (100), insbesondere eine mechanische intelligente Uhr (100), die ein System (1) nach dem vorhergehenden Anspruch umfasst.

9. Computerprogramm, umfassend Programmcodeanweisungen für das Ausführen der Schritte (10 bis 27) des Verfahrens nach einem der Ansprüche 1 bis 6, wenn das Programm von einer Verarbeitungseinheit (2) ausgeführt wird.

## Claims

1. A method for controlling access to at least one confidential datum (28) archived in a memory element of a watch, said memory element comprising two data categories, general data (31) and said confidential data (28), the method comprising the following steps:
- authentication (9) of the wearer of the watch (100) in order to authorise access to the functions of this watch (100), said step enabling said wearer to input proof of his/her identity by providing for the input of an authentication code or of a secret code via an interaction between the wearer and an input interface (34) on the watch (100);
- after this authentication, selection (10) of one of said watch functions requiring the use of at least one of said confidential (28) or general (31) data archived in the memory element;
- determination (12) of the category to which said at least one datum required by the function belongs; said step (12) comprising an estimation sub-step (13) in which an estimation is made as to whether an access criterion for said datum defines whether said datum belongs to the category of confidential data (28) or to the category of general data (31), said sub-step (13) comprising a phase in which computation operations by a processing unit are implemented (2) to obtain this access criterion from said datum, the nature or type of the function and a parameter for classifying said datum, said parameter defining whether said datum belongs to one or the other of the confidential data (28) or general data (31) categories and this definition by said parameter, according to the nature or type of the various functions of the watch, requiring confidential data (28) or general data (31) in the context of their embodiment;
- verification (15) of the identity of the wearer of the watch (100) from at least one element of biometric information comprised in a portion of this wearer's skin when said at least one datum belongs to the confidential data (28) category, said step (15) comprising:
• a phase in which the portion of skin is illuminated at various wavelengths;
• a phase in which images are captured of this portion of skin illuminated at at least one wavelength, and
• after this image capture phase, a phase in which at least one thermal image of the portion of skin is captured;
- authorisation (27) to use said at least one confidential datum by the function as soon as the identity of the wearer of the watch is verified.

2. The method according to the preceding claim, **characterised in that** the determination step (12) comprises a comparison sub-step (14) in which the estimated access criterion is compared to a reference criterion.

3. The method according to any of the preceding claims, **characterised in that** the verification step (15) comprises an acquisition sub-step in which a plurality of images of a portion of the wearer's skin adjacent to said sensor (7) is acquired (16) by at least one multispectral biometric skin sensor (7) comprised within the watch (100), said images comprising said at least one biometric information element comprised within this portion of skin.

4. The method according to any of the preceding claims, **characterised in that** the verification step (15) comprises a generation sub-step (17) in which an element of digital identification is generated from said at least one biometric information element comprised within the acquired images of the portion of skin.

5. The method according to any of the preceding claims, **characterised in that** the verification step (15) comprises a validation sub-step (23) in which a digital identification element generated in anticipation of the wearer's identification is validated.

6. The method according to any of the preceding claims, **characterised in that** the biometric information element relates to a vascular network or to a texture of this skin.

7. A system (1) for controlling access to at least one confidential datum archived in a memory element of a watch (100), implementing the method according to any of the preceding claims, the system comprising the following elements linked together: a processing unit (2), a multispectral biometric skin sensor (7), an input interface (34), an interface for transmitting visual information (4) and the memory element (6) comprising two data categories, general data (31) and said confidential data (28).

8. A watch (100), in particular a mechanical smartwatch (100), comprising a system (1) according to the preceding claim.

9. A computer program comprising program code instructions for the execution of the steps (10 to 27) of the method according to any of claims 1 to 6 when said program is executed by a processing unit (2).
